(19) Europäisches Patentamt
European Patent Office
Office européen des brevets

(11) **EP 2 336 424 B1**

(12) **EUROPÄISCHE PATENTSCHRIFT**

(45) Veröffentlichungstag und Bekanntmachung des Hinweises auf die Patenterteilung:
**08.02.2017 Patentblatt 2017/06**

(51) Int Cl.:
***E01C 19/00*** *(2006.01)*     ***E01C 19/48*** *(2006.01)*
***E01C 23/088*** *(2006.01)*

(21) Anmeldenummer: **10015261.0**

(22) Anmeldetag: **03.12.2010**

(54) **Selbstfahrende Baumaschine und Verfahren zur Steuerung einer selbstfahrenden Baumaschine**

Self-propelled construction machine and method for controlling same

Engin automobile et procédé de commande d'un engin automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2009 DE 102009059106**

(43) Veröffentlichungstag der Anmeldung:
**22.06.2011 Patentblatt 2011/25**

(73) Patentinhaber: **Wirtgen GmbH**
**53578 Windhagen (DE)**

(72) Erfinder:
• **Fritz, Matthias**
**53545 Linz/Rhein (DE)**

• **Barimani, Cyrus, Dr.**
**53639 Königswinter (DE)**
• **Hähn, Günter, Dr.**
**53639 Königswinter (DE)**

(74) Vertreter: **Oppermann, Frank et al**
**OANDO Oppermann & Oppermann LLP**
**Washingtonstrasse 75**
**65189 Wiesbaden (DE)**

(56) Entgegenhaltungen:
EP-A1- 1 118 713     EP-A1- 2 119 832
EP-B1- 1 103 659     WO-A1-95/16228
DE-A1- 19 750 315     DE-U1- 29 918 748
US-A- 5 612 864

EP 2 336 424 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine selbstfahrende Baumaschine, insbesondere eine Straßenfräse, einen Straßenfertiger oder einen Gleitschalungsfertiger, und ein Verfahren zur Steuerung einer selbstfahrenden Baumaschine, insbesondere Straßenfräse, Straßenfertiger oder Gleitschalungsfertiger.

Es sind verschiedene Arten von selbstfahrenden Baumaschinen bekannt. Zu diesen Maschinen zählen insbesondere die bekannten Gleitschalungsfertiger, Straßenfertiger oder Straßenfräsen. Die selbstfahrenden Baumaschinen zeichnen sich dadurch aus, dass sie über eine Arbeitseinheit mit Arbeitsmitteln zum Errichten von Baukörpern auf dem Gelände oder zum Verändern des Geländes verfügen.

Bei den bekannten Gleitschalungsfertigern umfasst die Arbeitseinheit eine Vorrichtung zum Formen von fließfähigem Material, insbesondere Beton, die nachfolgend als Betonmulde bezeichnet wird. Mit der Betonmulde können Baukörper unterschiedlicher Ausbildung, beispielsweise Leitwände oder Wasserrinnen hergestellt werden. Ein Gleitschalungsfertiger ist beispielsweise in der EP 1 103 659 B1 beschrieben.

Die bekannten Straßenfertiger verfügen üblicherweise über eine Einbaubohle als Arbeitseinheit. Die Einbaubohle ist am in Fertigungsrichtung gesehen hinteren Ende des Straßenfertigers so angeordnet, dass sie sich mit einer unteren Gleitplatte auf dem Material des einzubauenden Straßenbelags abstützt und dadurch eine Vorverdichtung des Materials erfolgt.

Bei der Arbeitseinheit der bekannten Straßenfräsen handelt es sich um eine Fräseinrichtung, die eine mit Fräswerkzeugen bestückte Fräswalze aufweist, mit der von dem Gelände Material in einer vorgegebenen Arbeitsbreite abgefräst werden kann.

Die bekannten selbstfahrenden Baumaschinen verfügen weiterhin über eine Antriebseinheit mit Antriebsmitteln zum Ausführen von translatorischen und/oder rotatorischen Bewegungen sowie eine Steuereinheit zum Steuern der Antriebseinheit derart, dass die Baumaschine auf dem Gelände translatorische und/oder rotatorische Bewegungen ausführt.

Bei der automatischen Steuerung von selbstfahrenden Baumaschinen stellt sich das Problem, dass sich ein vorgegebener Referenzpunkt auf der Baumaschine exakt entlang einer vorgegebenen Raumkurve im Gelände bewegen muss, um beispielsweise mit einem Gleitschalungsfertiger einen Baukörper mit einer vorgegebenen Form an der richtigen Position und in der korrekten Ausrichtung auf dem Gelände errichten zu können.

Ein bekanntes Verfahren zum Steuern von Gleitschalungsfertigern setzt den Einsatz eines Leitdrahtes voraus, der die Sollkurve vorgibt, auf der sich der Referenzpunkt der Baumaschine bewegen soll. Langgestreckte Objekte, beispielsweise Leitwände oder Wasserrinnen, können unter dem Einsatz eines Leitdrahtes effektiv hergestellt werden. Der Einsatz eines Leitdrahtes erweist sich aber dann als nachteilig, wenn Baukörper mit kleinen Abmessungen, beispielsweise zigarrenförmige Verkehrsinseln, die sich durch kleine Weglängen und enge Radien auszeichnen, hergestellt werden sollen.

Es ist auch bekannt, selbstfahrende Baumaschinen unter dem Einsatz eines globalen Navigationssatellitensystems (GPS) zu steuern. Eine Baumaschine mit einem GPS-Empfänger ist beispielsweise aus der US-A-5,612,864 bekannt.

Aus der WO 95/16228 ist eine selbstfahrende Baumaschine bekannt, die über eine Speichereinheit verfügt, in der die tatsächliche und die gewünschte Geländeform beschreibende Daten gespeichert sind. Diese Daten müssen im Vorfeld des Einsatzes der Baumaschine ermittelt werden. Mit einem GPS-Empfänger wird die aktuelle Position der Baumaschine erfasst. Darüber hinaus werden die aktuellen und gewünschten Daten, die das aktuelle und gewünschte Geländemodell beschreiben, fortlaufend miteinander verglichen, wobei die Baumaschine derart gesteuert wird, dass sich die aktuelle Geländeformation an die gewünschte Geländeformation angleicht.

Die DE 197 50 315 A1 beschreibt eine Baumaschine, deren Steuerung wieder die Eingabe und Speicherung der tatsächlichen und gewünschten Geländeformation voraussetzt, was mit einem großen Aufwand verbunden ist.

Die EP 1 118 713 A1 beschreibt einen Straßenfertiger, bei dem die tatsächliche Position der Einbaubohle bestimmt und mit der Soll-Position verglichen wird, um die Einbaubohle auf die gewünschte Position einzustellen.

Die EP 2 119 832 A1 offenbart eine Baumaschine, die nach dem Prinzip eines Autopiloten gesteuert wird. Die Baumaschine fährt vorgegebene Positionen ab, die den Verlauf der zu bearbeitenden Wegstrecke kennzeichnen sollen. Wenn diese Positionen mit einem GPS-System festgelegt werden, können ortsfeste Sensoren entfallen.

Aus der DE 299 18 748 U1 ist eine Steuerung für einen Straßenfertiger bekannt, die eine Festlegung eines Bezugspunktes auf der Einbaubohle und die Bestimmung der räumlichen Lage eines Vorhaltepunktes voraussetzt, wobei die Baumaschine in Abhängigkeit von dem Vorhaltepunkt gesteuert wird.

Nachteilig ist, dass die Vermessung eines Objektes unter dem Einsatz eines übergeordneten Messsystems für die Steuerung der Baumaschine einen großen technischen Aufwand erfordert, da das Objekt in das komplexe Bauprojekt eingebunden werden muss. Aufwändig ist insbesondere die erforderliche Vermessung von verschiedenen Referenzpunkten im Messsystem. Dieser Aufwand ist nur bei großen Objekten zu rechtfertigen. Bei kleinen Objekten hingegen ist der Aufwand unverhältnismäßig groß. Ein weiterer Nachteil der Einbindung der Objekte in das komplexe Bauprojekt liegt in der Praxis darin, dass bei kleinen Objekten oftmals Zwangspunkte, beispielsweise vorhandene Hydranten oder Wasserabläufe auf der Baustelle berücksichtigt werden müssen, die möglicherweise nicht exakt an den Punkten liegen, an denen sie geplant worden sind. Wenn die Projektdaten nicht mit den örtlichen Gegebenheiten übereinstimmen sollten, müssen die Projektdaten mit verhältnismäßig großem Aufwand außerhalb der Baustelle im Büro geändert und die geänderten Projektdaten dann auf der Baustelle wieder eingelesen werden.

Der Erfindung liegt daher die Aufgabe zugrunde, eine selbstfahrende Baumaschine, insbesondere Straßenfräse, Straßenfertiger oder Gleitschalungsfertiger, zu schaffen, die sich ohne großen vermessungstechnischen Aufwand mit hoher Genauigkeit entlang einer Sollkurve mit verhältnismäßig kleinen Weglängen und engen Radien automatisch bewegen lässt. Eine weitere Aufgabe der Erfindung ist, ein Verfahren anzugeben, das die automatische Steuerung einer selbstfahrenden Baumaschine ohne großen vermessungstechnischen Aufwand mit hoher Genauigkeit entlang einer Sollkurve mit verhältnismäßig kleinen Weglängen und engen Radien erlaubt.

Die Lösung dieser Aufgaben erfolgt erfindungsgemäß mit den Merkmalen der unabhängigen Patentansprüche. Die Gegenstände der abhängigen Ansprüche betreffen bevorzugte Ausführungsformen der Erfindung.

Die erfindungsgemäße selbstfahrende Baumaschine verfügt über eine Steuereinheit, die Mittel zur Vorgabe einer bestimmten geometrischen Form des zu errichtenden Baukörpers oder des zu verändernden Geländes aufweist. Diese bestimmte Form kann beispielsweise eine Verkehrsinsel in Form einer Zigarre sein. Sie kann von dem Bediener der Maschine eingegeben oder ausgewählt werden.

Die Steuereinheit der erfindungsgemäßen selbstfahrenden Baumaschine verfügt weiterhin über Mittel zur Ermittlung von Daten, die die Position und/oder die Orientierung eines Referenzpunktes der Baumaschine in Bezug zu einem von der Position und Orientierung der Baumaschine unabhängigen Bezugssystem beschreiben. Das von dem maschinenbezogenen Referenzsystem unabhängige Bezugssystem kann beliebig gewählt werden, so dass es nicht erforderlich ist, im Gelände verschiedene Referenzpunkte zu vermessen.

Die Funktion der erfindungsgemäßen Steuerung der Baumaschine beruht darauf, dass die Baumaschine zu einem vorgegebenen Startpunkt im Gelände bewegt wird, der frei gewählt werden kann. An dem vorgegebenen Startpunkt wird die Baumaschine in einer vorgegebenen Orientierung ausgerichtet. Damit steht Position und Orientierung des Objektes fest. Folglich kann das Objekt im Gelände unter Berücksichtigung möglicher Zwangspunkte immer optimal angeordnet werden. Beispielsweise kann der Startpunkt auf den Eckpunkt einer im Gelände bereits vorhandenen Rinne gelegt werden, deren Position nicht exakt dem Lageplan entsprechen muss.

Darüber hinaus verfügt die Steuereinheit der Baumaschine über Mittel zur Ermittlung von eine Sollkurve beschreibenden Daten, wobei die Sollkurve die Kurve ist, auf der sich der Referenzpunkt (R) der Baumaschine in dem von Position und Orientierung der Baumaschine unabhängigen Bezugssystem (X, Y, Z) bewegen soll. Die Mittel zur Ermittlung von die Sollkurve beschreibenden Daten sind derart ausgebildet, dass die die Sollkurve beschreibenden Daten auf der Grundlage der vorgegebenen geometrischen Form des zu errichtenden Baukörpers oder des zu verändernden Geländes und auf der Grundlage der Position und Orientierung des Referenzpunktes (R) der Baumaschine in dem von der Position und Orientierung der Baumaschine unabhängigen Bezugssystem (X, Y, Z) ermittelt werden.

Die Daten, die die Sollkurve beschreiben, können die Wegstrecke und/oder die Krümmung der Sollkurve sein. Diese Daten sind abhängig von der Form des Objektes.

Bei einer bevorzugten Ausführungsform sind die Mittel zum Steuern der Antriebseinheit derart ausgebildet, dass die Antriebseinheit in Abhängigkeit von der Position und Orientierung des Referenzpunktes in dem von der Position und Orientierung der Baumaschine unabhängigen Bezugssystem derart gesteuert wird, dass der Abstand zwischen der von der Sollkurve beschriebenen Soll-Position und der Ist-Position der Baumaschine und/oder die Richtungsdifferenz zwischen der von der Sollkurve beschriebenen Soll-Richtung und der Ist-Richtung minimal ist. Die hierfür erforderlichen Regelalgorithmen sind dem Fachmann bekannt.

Eine besonders bevorzugte Ausführungsform der Erfindung sieht den Einsatz eines globalen Navigationssatellitensystems (GPS) vor, um die Position und/oder die Orientierung des Referenzpunktes der Baumaschine zu bestimmen. Damit ist das von der Position und Orientierung der Baumaschine unabhängige Bezugssystem das Referenzsystem des globalen Navigationssatellitensystems, dessen Lage und Richtung sich in Bezug zu dem maschinenbezogenen Referenzsystem mit der Bewegung der Baumaschine im Gelände ständig ändert. Die Baumaschine verfügt über einen ersten und einen zweiten DGPS-Empfänger (Rover) zur Dekodierung der GPS-Satellitensignale des globalen Navigationssatellitensystems und von Korrektursignalen einer Referenzstation für die Bestimmung der Position und/oder Orientierung der Baumaschine, wobei der erste und zweite DGPS-Empfänger an der Baumaschine in unterschiedlichen Positionen angeordnet sind.

Anstelle eines globalen Navigationssatellitensystems kann die Position und/oder Orientierung des Referenzpunktes aber auch mit einem satellitenunabhängigen Messsystem erfolgen. Allein entscheidend ist, dass die Steuereinheit die Position und Orientierung des Referenzpunktes beschreibende Daten erhält.

Bei einer weiteren bevorzugten Ausführungsform weist die Steuereinheit eine Eingabeeinheit mit Mitteln (7B) zum Eingeben von Parametern auf, die die geometrische Form des zu errichtenden Baukörpers oder des zu verändernden Geländes beschreiben. Diese Parameter können beispielsweise die Länge einer Geraden und/oder den Radius eines Kreisbogens definierende Parameter sein. Dabei wird davon ausgegangen, dass sich das Objekt aus Geraden oder Kreisbögen zusammensetzen lässt. Dies ist beispielsweise bei einer Verkehrsinsel in Form einer Zigarre der Fall. Es können aber auch andere geometrische Figuren mit den Parametern definiert werden.

Bei einer weiteren bevorzugten Ausführungsform weist die Steuereinheit eine Eingabeeinheit mit Mitteln zur Auswahl einer geometrischen Form aus einer Mehrzahl von vorgegebenen geometrischen Formen auf, wobei die Mehrzahl der geometrischen Formen in einer mit der Eingabeeinheit zusammenwirkenden Speichereinheit gespeichert ist. Dies hat den Vorteil, dass die die geometrische Form beschreibenden Daten nicht neu erstellt werden müssen, sondern auf bereits erstellte Datensätze zurückgegriffen werden kann. Beispielsweise kann zwischen einem Kreis oder einer Zigarre als Objekt ausgewählt werden.

Eine weitere besonders bevorzugte Ausführungsform sieht Mittel zum Verändern einer vorgegebenen geometrischen Form vor. Dies hat den Vorteil, dass beispielsweise die Form einer Zigarre ausgewählt und dann die Abmessungen der Zigarre an die konkreten Erfordernisse auf der Baustelle angepasst werden können.

Im Folgenden werden Ausführungsbeispiele der Erfindung unter Bezugnahme auf die Zeichnungen näher erläutert.

Es zeigen:

Fig. 1    ein Ausführungsbeispiel eines Gleitschalungsfertigers in der Seitenansicht,

Fig. 2    ein Ausführungsbeispiel einer Straßenfräse in der Seitenansicht,

Fig. 3    ein auf die Baumaschine bezogenes Maschinenkoordinatensystem zusammen mit der nur andeutungsweise dargestellten Baumaschine,

Fig. 4    ein von der Position und Orientierung der Baumaschine unabhängiges Messungskoordinatensystem zusammen mit dem Maschinenkoordinatensystem und der Baumaschine von Fig. 3,

Fig. 5    den Krümmungsverlauf und Richtungsverlauf eines Objektes in Form einer Zigarre,

Fig. 6    die Darstellung der ein zigarrenförmiges Objekt beschreibenden geometrischen Form zum Steuern der Baumaschine vor der Transformation in das Messungskoordinatensystem,

Fig. 7    die Darstellung der ein zigarrenförmiges Objekt beschreibenden Sollkurve zum Steuern der Baumaschine nach der Transformation in das Messungskoordinatensystem,

Fig. 8    den Abstand zwischen der von der Sollkurve beschriebenen Soll-Position und der Ist-Position der Baumaschine und

Fig. 9    die Richtungsdifferenz zwischen der von der Sollkurve beschriebenen Soll-Richtung und der Ist-Richtung der Baumaschine.

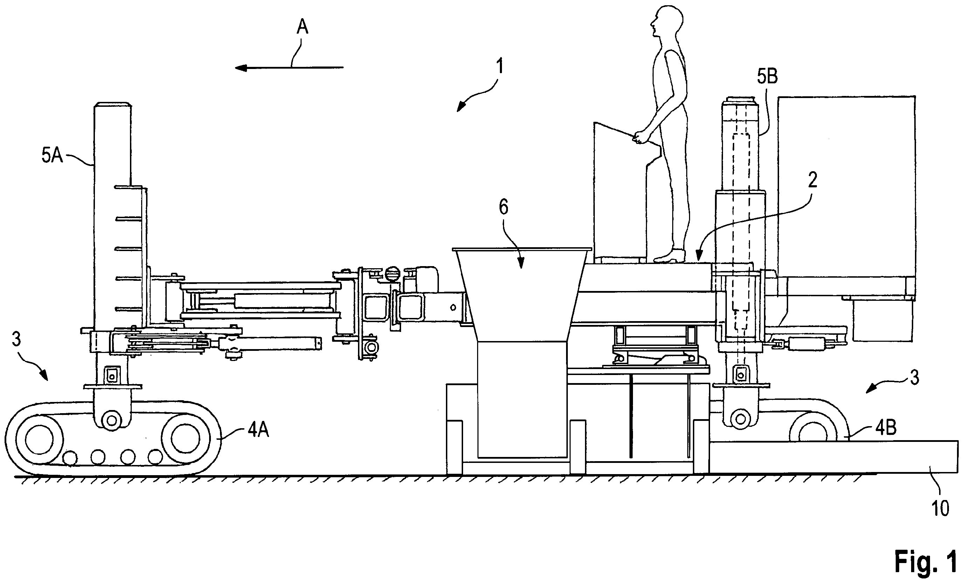

Die Fig. 1 zeigt als Beispiel für eine selbstfahrende Baumaschine einen Gleitschalungsfertiger in der Seitenansicht, der in der EP 1 103 659 B1 im Einzelnen beschrieben ist. Da Gleitschalungsfertiger als solche zum Stand der Technik gehören, werden hier nur die für die Erfindung wesentlichen Komponenten der Baumaschine beschrieben.

Der Gleitschalungsfertiger 1 weist einen Maschinenrahmen 2 auf, der von einem Fahrwerk 3 getragen wird. Das Fahrwerk 3 weist zwei vordere und zwei hintere Kettenlaufwerke 4A, 4B auf, die an vorderen und hinteren Hubsäulen 5A, 5B befestigt sind. Die Arbeitsrichtung (Fahrtrichtung) des Gleitschalungsfertigers ist mit einem Pfeil A gekennzeichnet.

Die Kettenlaufwerke 4A, 4B und Hubsäulen 5A, 5B sind Teil einer Antriebseinheit des Gleitschalungsfertigers, die über Antriebsmittel zum Ausführen von translatorischen und/oder rotatorischen Bewegungen der Baumaschine auf dem Gelände verfügt. Durch Anheben und Absenken der Hubsäulen 5A, 5B kann der Maschinenrahmen 2 gegenüber dem Boden in der Höhe und Neigung bewegt werden. Mit den Kettenlaufwerken 4A, 4B kann die Baumaschine vor- und zurückbewegt werden. Damit hat die Baumaschine drei translatorische und drei rotatorische Freiheitsgrade.

Der Gleitschalungsfertiger 1 verfügt über eine nur andeutungsweise dargestellte Vorrichtung 6 zum Formen von Beton, die nachfolgend als Betonmulde bezeichnet wird. Die Betonmulde ist Teil einer Arbeitseinheit mit Arbeitsmitteln zur Errichtung eines Baukörpers 10 mit einer vorgegebenen Form auf dem Gelände.

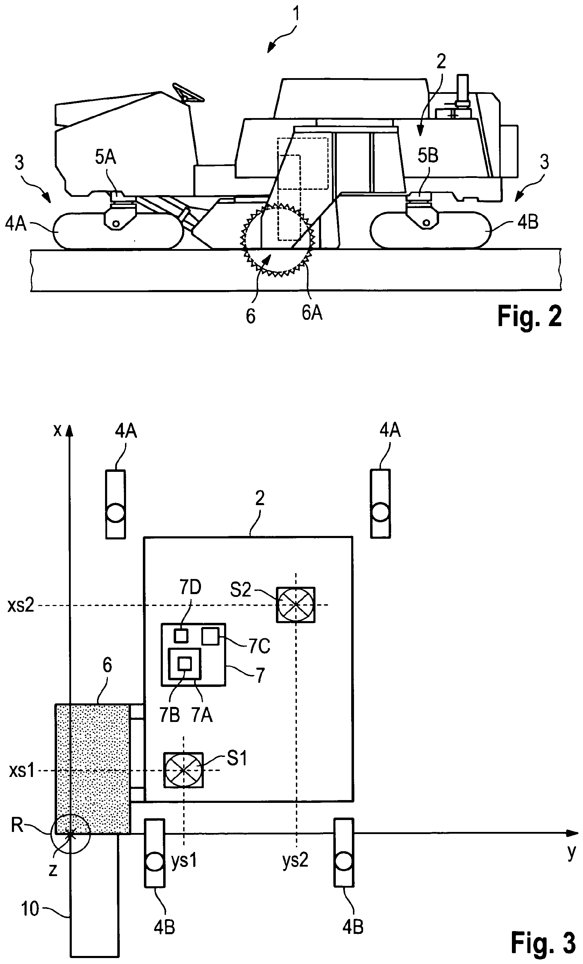

Fig. 2 zeigt als weiteres Beispiel für eine selbstfahrende Baumaschine eine Straßenfräse in der Seitenansicht. Auch die Straßenfräse 1 weist wieder einen Maschinenrahmen 2 auf, der von einem Fahrwerk 3 getragen wird. Das Fahrwerk 3 weist wieder vordere und hintere Kettenlaufwerke 4A, 4B auf, die an vorderen und hinteren Hubsäulen 5A, 5B befestigt sind. Die Straßenfräse verfügt über eine Arbeitseinheit mit Arbeitsmitteln zum Verändern des Geländes.

Hierbei handelt es sich um eine Fräseinrichtung 6 mit einer mit Fräswerkzeugen bestückten Fräswalze 6A.

Fig. 3 zeigt die selbstfahrende Baumaschine in einem maschinenbezogenen kartesischen Koordinatensystem (x, y, z). Bei der Baumaschine kann es sich um einen Gleitschalungsfertiger, eine Straßenfräse oder jede andere Baumaschine mit einer entsprechenden Arbeitseinheit handeln. Bei dem vorliegenden Ausführungsbeispiel handelt es sich um einen Gleitschalungsfertiger 1, der über eine Betonmulde 6 verfügt. Der Gleitschalungsfertiger 1 mit der Betonmulde 6 ist nur andeutungsweise dargestellt. Er weist den Maschinenrahmen 2, mit den Kettenlaufwerken 4A, 4B und die Betonmulde 6 auf.

Der Ursprung des Maschinenkoordinatensystems liegt auf einem Referenzpunkt R des Gleitschalungsfertigers 1, wobei als Referenzpunkt R die in Fahrtrichtung innere, hintere Kante der Betonmulde 6 festgelegt wird. Diese Kante entspricht der äußeren Begrenzung des zur errichtenden Baukörpers 10. Im Maschinenkoordinatensystem wird der Referenzpunkt R wie folgt bestimmt:

$$R = xR, yR, zR = 0, 0, 0$$

Das Maschinenkoordinatensystem ist über sechs Freiheitsgrade eindeutig definiert, wobei die Weglängen dx, dy, dz die drei Translationen und die Winkel $\omega$, $\varphi$, $\kappa$ die drei Rotationen beschreiben.

Zur Vereinfachung wird angenommen, dass die Baumaschine auf einem ebenen Gelände steht und nicht geneigt ist. Damit sind die Rotationswinkel $\omega$ und $\kappa$ jeweils gleich Null. Das Maschinenkoordinatensystem und die Baumaschine sind derart aufeinander ausgerichtet, dass der Rotationswinkel $\varphi$ ebenfalls gleich Null ist.

Es wird weiter angenommen, dass die Betonmulde 6 mit der Unterkante auf dem Boden aufliegt. Dabei wird festgelegt, dass sich die Höhe zR des Referenzpunktes R bei der Bewegung der Baumaschine im ebenen Gelände nicht ändern soll.

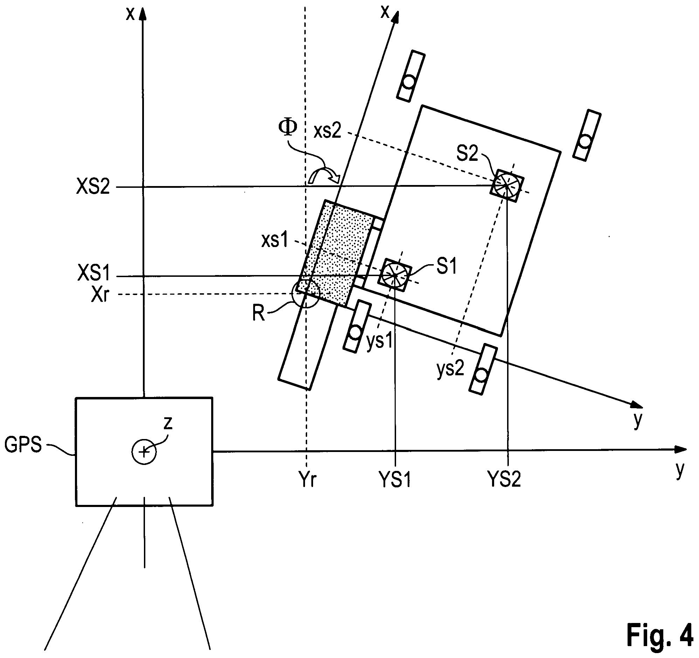

Fig. 4 zeigt das Maschinenkoordinatensystem zusammen mit einem von dem Maschinenkoordinatensystem (x, y, z) unabhängigen kartesischen Bezugssystem, das nachfolgend als Messungskoordinatensystem (X, Y, Z) bezeichnet wird. Das Messungskoordinatensystem (X, Y, Z) kann zufällig gewählt werden. Es behält seine Position und Orientierung mit der Bewegung der Baumaschine bei.

Zum Steuern der Antriebseinheit verfügt die Baumaschine über eine nur andeutungsweise dargestellte Steuereinheit 7. Die Steuereinheit 7 steuert die Antriebsmittel der Antriebseinheit derart an, dass die Baumaschine auf dem Gelände die erforderlichen translatorischen und/oder rotatorischen Bewegungen ausführt, um den Baukörper 10 errichten oder das Gelände verändern zu können. Die Steuereinheit 7 umfasst sämtliche zur Durchführung von Rechenoperationen erforderlichen und zur Erzeugung von Steuersignalen für die Antriebsmittel der Antriebseinheit erforderlichen Komponenten. Sie kann eine eingeständige Baugruppe bilden oder Bestandteil der zentralen Steuerung der Baumaschine sein.

Für die Steuerung der Antriebseinheit wird die Position und/oder Orientierung des Referenzpunktes R der Baumaschine im Maschinenkoordinatensystem (x, y, z) auf das von der Bewegung der Baumaschine unabhängige Messungskoordinatensystem (X, Y, Z) übertragen.

Bei dem vorliegenden Ausführungsbeispiel erfolgt die Bestimmung der Position und Orientierung des Referenzpunktes R unter dem Einsatz eines globalen Navigations-Satellitensytems (GPS), das in Fig. 4 nur andeutungsweise dargestellt ist. Anstelle eines satellitengestützten Navigationssystems kann aber auch ein satellitenunabhängiges terrestrisches Messsystem vorgesehen sein (Totalstation).

Da die Anforderungen an die Genauigkeit der Bestimmung von Position und Orientierung hohe Anforderungen gestellt werden, wird vorzugsweise von dem Satellitennavigationssystem Gebrauch gemacht, das als globales Satellitennavigationssystem mit Differenzsignal (DGPS Differential Global Positioning System) bekannt ist. Dabei beruht das GPS-basierte Verfahren zur Bestimmung der Orientierung auf der Messung der Position mit zwei DGPS-Empfängern (Rover), die an unterschiedlichen Punkten S1, S2 an der Baumaschine angeordnet sind.

In den Figuren 3 und 4 sind die beiden DPGS-Empfänger S1 und S2 nur andeutungsweise dargestellt. Es wird der allgemeinere Fall angenommen, dass der DGPS-Empfänger S1 und der DGPS-Empfänger S2 neben dem Ursprung des Maschinenkoordinatensystems liegen, in dem der Referenzpunktes R liegt, dessen Position und Orientierung in dem Messungskoordinatensystem bestimmt wird.

Die Position der DGPS-Empfänger S1 und S2 ist im Maschinenkoordinatensystem (x, y, z) durch die Koordinaten S1 = xs1, ys1, zs1 und S2 = xs2, ys2, zs2 bestimmt. Im Messungskoordinatensystem (X, Y, Z) ist die Position der DGPS-Empfänger S1 und S2 bestimmt durch S1 = XS1, YS1, ZS1 und S2 = XS2, YS2, ZS2.

Mit den beiden DGPS-Empfängern S1 und S2 ermittelt die Steuereinheit 7 unter dem Einsatz des GPS-Systems Daten, die die Position der DGPS-Empfänger beschreiben. Aus diesen Positionsdaten berechnet die Steuereinheit 7 dann die Position und Orientierung des Referenzpunktes R der Baumaschine, neben dem die beiden DGPS-Empfänger liegen. Die Steuereinheit 7 führt hierzu eine Transformation mit der Rotationsmatrix R durch, um die im Messungskoordinatensystem (X, Y, Z) mit den DGPS-Empfängern S1 und S2 gemessenen Koordinaten an den Punkten S1 und S2 auf den Referenzpunkt R zu transformieren

$$\begin{bmatrix} \Delta X \\ \Delta Y \\ \Delta Z \end{bmatrix} = \begin{bmatrix} Xs1 - xs1 \\ Ys1 - ys1 \\ Zs1 - zs1 \end{bmatrix}$$

$$\begin{bmatrix} X \\ Y \\ Z \end{bmatrix} = [R] \begin{bmatrix} x \\ y \\ z \end{bmatrix} + \begin{bmatrix} \Delta X \\ \Delta Y \\ \Delta Z \end{bmatrix}$$

$$\begin{bmatrix} X \\ Y \\ Z \end{bmatrix} = \begin{bmatrix} \cos\phi - \sin\phi & 0 \\ \sin\phi\cos\phi & 0 \\ 0 & 0 & 1 \end{bmatrix} \begin{bmatrix} x \\ y \\ z \end{bmatrix} + \begin{bmatrix} \Delta X \\ \Delta Y \\ \Delta Z \end{bmatrix}$$

Als Ergebnis ermittelt die Steuereinheit die Messungskordinaten des Referenzpunktes R an der Betonmulde 6 des Gleitschalungsfertigers 1 im Messungskoordinatensystem (X, Y, Z):

$$R = \begin{bmatrix} Xr \\ Yr \\ Zr \end{bmatrix}$$

Den Richtungswinkel Φ der Baumaschine berechnet die Steuereinheit aus den Koordinaten (XS2, XS1; YS2, YS1) der Messpunkte S1 und S2 nach der folgenden Gleichung:

$$\Phi = \arctan(Xs2 - Xs1 / Ys2 - Ys1)$$

Die Steuereinheit 7 steuert die Antriebseinheit der Baumaschine derart an, dass sich die Baumaschine entlang einer vorgegebenen Sollkurve bewegt, d.h. der Referenzpunkt R der Baumaschine sich auf der Sollkurve bewegt.
In allgemeiner Form kann die Sollkurve als eine Funktion der Wegstrecke und der Krümmung wie folgt definiert werden:

$$\begin{bmatrix} X \\ Y \end{bmatrix} = f(L) = \int \begin{matrix} \cos\alpha \\ \sin\alpha \end{matrix} (dl) = \begin{bmatrix} X0 \\ Y0 \end{bmatrix}$$

wobei

$$\alpha = \int K(dl)$$

ist. Die Krümmung K ist definiert durch K = 1/R.

Bei dem vorliegenden Ausführungsbeispiel soll der Gleitschalungsfertiger eine Verkehrsinsel in Form einer "Zigarre" fertigen. Die geometrische Form der Zigarre wird durch eine Kurve beschrieben, die zwei parallele Wegstrecken und zwei Kreisbogen umfasst. Nachfolgend wird nur der Teil der Kurve beschrieben, der die Anfangsgerade und den ersten Halbkreisbogen umfasst.

Bei dem Ausführungsbeispiel der Zigarre ist der Krümmungsverlauf in der Anfangsgeraden gleich Null. Der Krümmungsverlauf ist konstant, wenn sich der Referenzpunkt R der Baumaschine auf dem ersten Kreisbogen bewegt. Wenn die Baumaschine den Kreisbogen verlassen hat, ist der Krümmungsverlauf wieder Null.

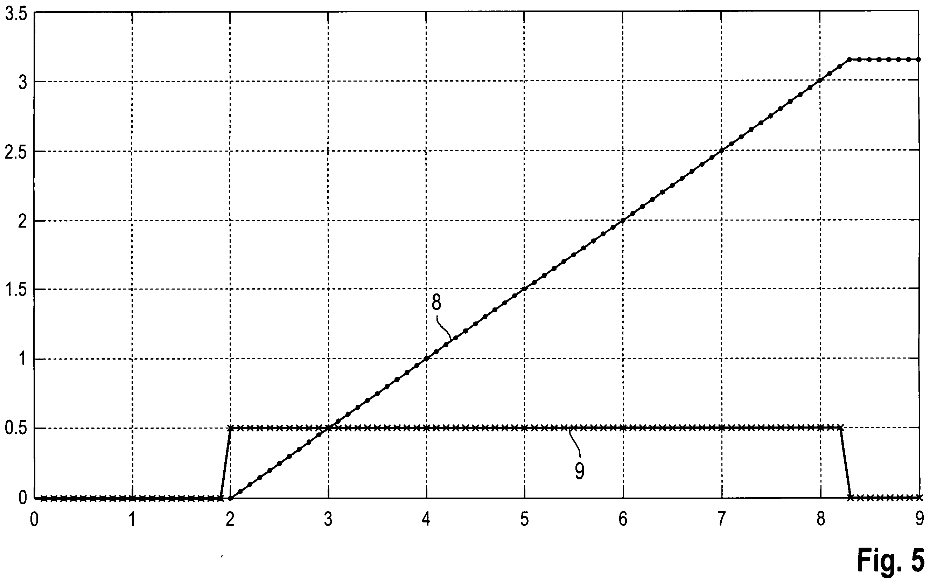

Fig. 5 zeigt den Krümmungsverlauf 8 und den Richtungsverlauf 9 des Gleitschalungsfertigers bei der Fertigung einer Zigarre, deren geometrische Form durch eine Gerade mit einer Länge von 2 m und einen Halbkreisbogen mit einem Radius von 2 m beschrieben wird. Hierbei stellen die Länge und der Radius zwei Parameter dar, mit denen die geometrische Form der Zigarre vorgegeben wird. Es wird deutlich, das sich der Richtungsverlauf beim Einfahren der Baumaschine in den Kreisbogen ändert.

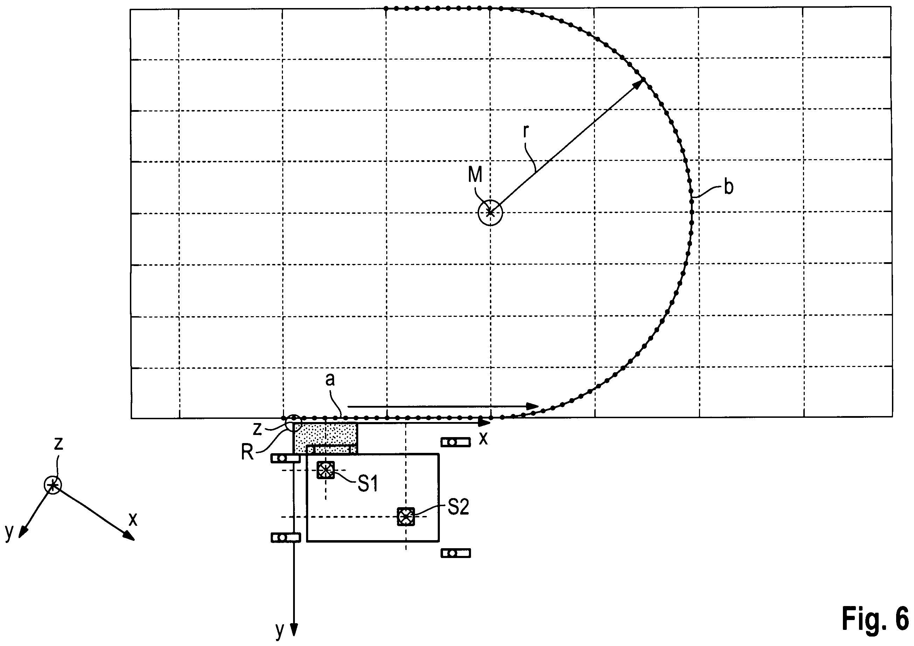

Zunächst gibt der Bediener der Baumaschine eine bestimmte geometrische Form vor, beipielsweise die Form der Zigarre vor. Der Bediener kann die geometrische Form frei vorgeben. Fig. 6 zeigt die geometrische Form, die durch die Gerade a und den Halbkreisbogen b beschrieben wird. Lediglich zur Verdeutlichung ist die geometrische Form der Zigarre auf einem Gitternetz dargestellt, das sich auf das Maschinenkoordinatensystem bezieht. In Fig. 6 ist das Messungskoordinatensystem (X, Y, Z) nur deshalb angedeutet, um den Bezug von Maschinen- und Messungskoordinatensystem darzustellen.

Die erfindungsgemäße Steuerung beruht darauf, dass für den Gleitschalungsfertiger im Gelände zunächst ein Startpunkt frei ausgewählt wird, an dem mit der Fertigung des Baukörpers 10, beispielsweise der Zigarre, begonnen wird. Dieser Startpunkt entspricht dem Ursprung des Maschinenkoordinatensystems, d.h. dem Referenzpunkt (Fig. 6). Beispielsweise kann der Startpunkt neben einem im Gelände vorgegebenen Zwangspunkt, beispielsweise einem Wassereinlauf liegen. Der Startpunkt definiert den Ort, an dem der Baukörper 10, beispielsweise die Zigarre errichtet werden soll. An dem Startpunkt wird die Orientierung der Baumaschine frei vorgegeben, wodurch die Richtung festgelegt wird, in der sich der Baukörper 10, beispielsweise die Zigarre erstrecken soll.

Die Baumaschine wird nunmehr an den ausgewählten Startpunkt gefahren und in der vorgegebenen Orientierung ausgerichtet. Dieser Vorgang ist nicht automatisiert. Anschließend erfolgt die automatisierte Steuerung der Baumaschine.

Nach der Positionierung und Ausrichtung der Baumaschine ermittelt die Steuereinheit 7 für den Startpunkt die Daten, die die Position und Orientierung des Referenzpunktes R im Messungskoordinatensystem (X, Y, Z) beschreiben. Für die nachfolgende Steuerung muss die vorgegebene geometrische Form, beispielsweise die Zigarre, nunmehr in das Messungskoordinatensystem (X, Y, Z) transformiert werden. Die Steuereinheit 7 ermittelt auf der Grundlage der vorgegebenen geometrischen Form des zu errichtenden Baukörpers oder des zu verändernden Geländes und auf der Grundlage der Position und Orientierung des Referenzpunktes R der Baumaschine in dem von der Position und Orientierung der Baumaschine unabhängigen Messungskoordinatensystem (X, Y, Z) Daten, die eine Sollkurve beschreiben, wobei die Sollkurve die Kurve ist, auf der sich der Referenzpunkt R der Baumaschine in dem Messungskoordinatensystem (X, Y, Z) bewegen soll.

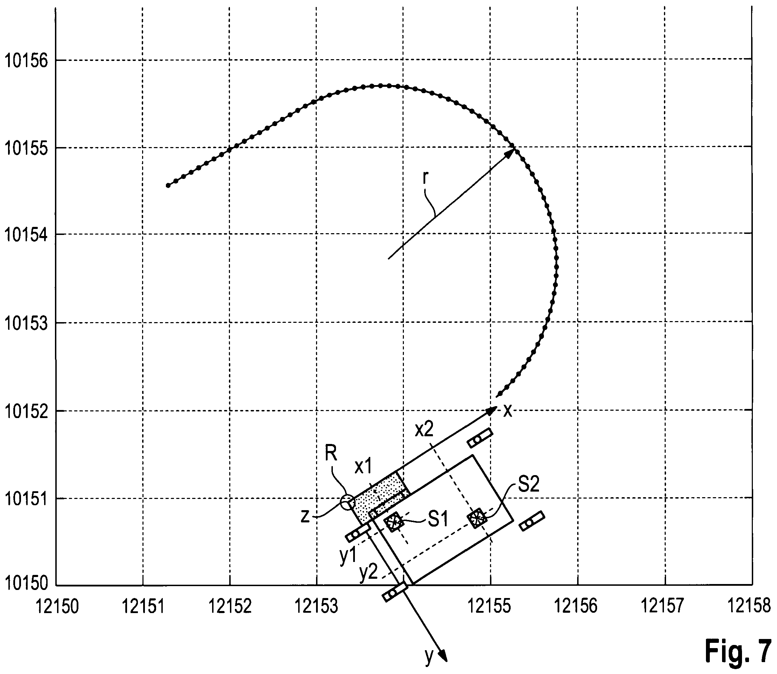

Die Figuren 6 und 7 veranschaulichen die Übertragung der frei vorgegebenen geometrischen Form (Fig. 6) in das Messungskoordinatensystem (X,Y,Z) (Fig. 7), um die Soll-Kurve festzulegen, die Soll-Positonen des Referenzpunktes im Messungskoordinatensystem (X, Y, Z) definiert.

Nach der Bestimmung der Position und Ausrichtung des Referenzpunktes R am Startpunkt der Baumaschine und der Festlegung der Soll-Kurve setzt die Steuereinheit 7 die Baumaschine in Gang. Die Steuereinheit ermittelt nunmehr kontinuierlich oder in diskreten zeitlichen Schritten die Ist-Position (Xr, Yr) und die Ist-Richtung ($\Phi$) des Referenzpunktes R der Baumaschine im Messungskoordinatensystem (X, Y, Z). Dabei berechnet die Steuereinheit jeweils den Abstand D zwischen der Soll-Position P und der Ist-Position (Xr, Yr) und die Richtungsdifferenz $\Delta\Phi$ zwischen der Soll-Richtung $\alpha$ und der Ist-Richtung $\Phi$.

Die Steuereinheit 7 berechnet mit einem vorgegebenen Regelalgorithmus aus dem Abstand D und der Richtungsdifferenz $\Delta\Phi$ die jeweiligen Stellwerte für die Antriebmittel der Antriebseinheit derart, dass der Abstand D und die Richtungsdifferenz $\Delta\Phi$ minimal sind, d.h. sich der Referenzpunkt der Baumaschine auf der Sollkurve bewegt. Derartige Regelalgorithmen sind dem Fachmann bekannt.

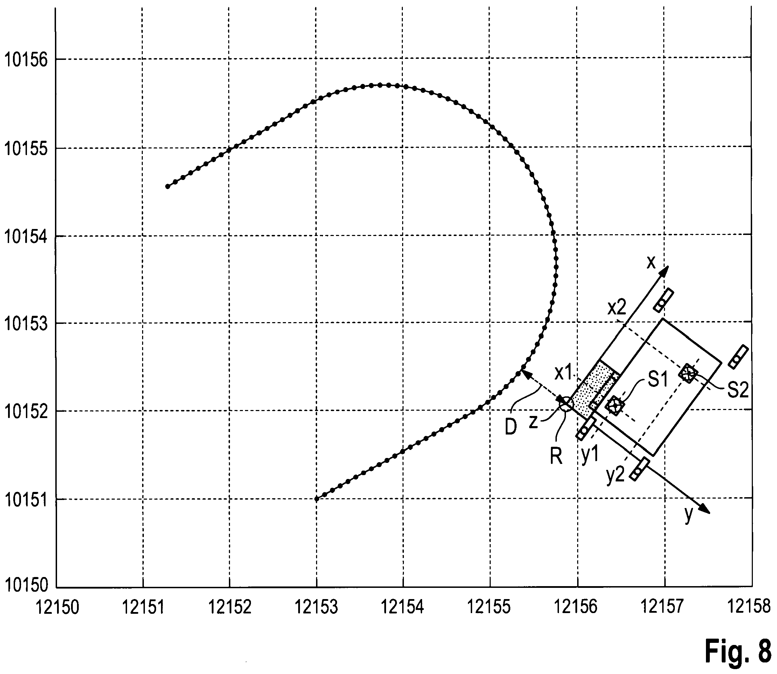

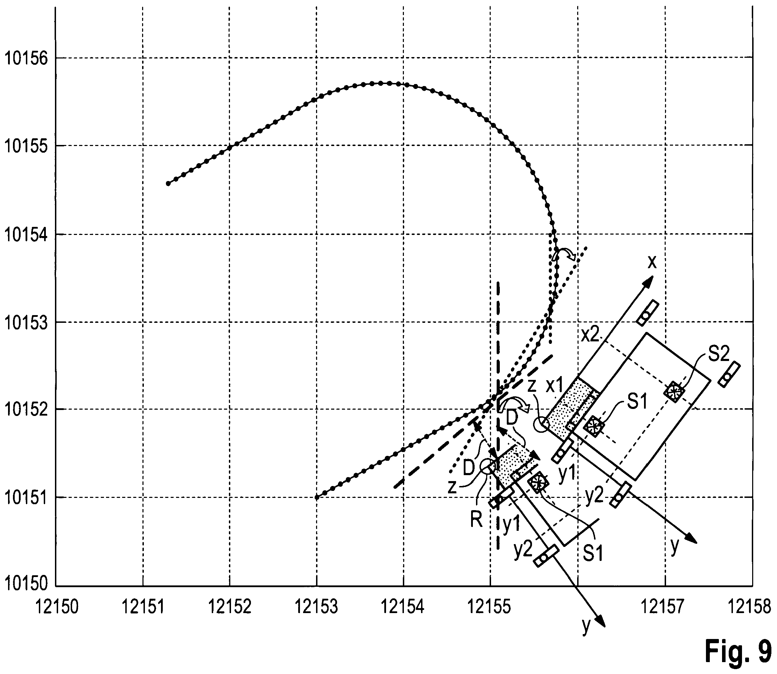

Fig. 8 zeigt den Abstand D zwischen der Soll-Position P eines Punktes auf der Sollkurve und der Ist-Position (Xr, Yr) des Referenzpunktes R, während Fig. 9 die Richtungsdifferenz $\Delta\Phi$ zwischen der Soll-Richtung $\alpha$ und der Ist-Richtung $\Phi$ auf einem Punkt der Sollkurve zeigt. Die Lenkungskorrektur ergibt sich als eine Funktion des Abstandes D und der Richtungsdifferenz ΔΦ (Lenkungskorrektur = f (D, ΔΦ).

Für die Vorgabe der geometrischen Form, d.h. für die Vorgabe eines bestimmten Objektes, weist die Steuereinheit eine ebenfalls nur andeutungsweise dargestellte Eingabeeinheit 7A auf. Bei einer Ausführungsform weist die Eingabeeinheit 7A Mittel 7B beispielsweise in Form einer Tastatur oder eines Touch-Screen auf. Auf der Tastatur oder dem Touch-Screen 7B kann der Bediener der Maschine verschiedene Parameter eingeben, die die geometrische Form beschreiben. Beispielsweise kann der Bediener die Länge der Gerade und den Radius des Kreisbogens für eine Zigarre eingeben. Die Eingabeeinheit 7A kann auch Mittel 7B aufweisen, beispielsweise wieder eine Tastatur oder einen Touch-Screen, um aus einer Mehrzahl von geometrischen Formen, die in einer Speichereinheit 7C der Steuereinheit gespeichert sind, eine geometrischen Form auszuwählen, die das gewünschte Objekt beschreibt. Ein weiteres Ausführungsbeispiel der Steuereinheit 7 sieht neben der Eingabe von Parametern und/oder der Auswahl von geometrischen Formen die Veränderung einer eingegebenen oder ausgewählten geometrischen Form vor. Beispielsweise kann eine Zigarre mit einer vorgegebenen Geradenlänge und einem vorgegeben Bogenradius ausgewählt und dann mit einer Eingabe neuer Parameter auf der Tastatur oder dem Touch-Screen 7B für die Geradenlänge und/oder den Bogenradius die ausgewählte Zigarre den besondern Erfordernissen auf der Baustelle in den Dimensionen angepasst werden, beispielsweise die Zigarre vergrößert oder verkleinert, insbesondere in der Breite oder Länge verändert werden.

Die Eingabeeinheit 7A weist darüber hinaus Mittel 7D, beispielsweise in Form eines Schalters oder Tasters 7D auf, mit dem die Baumaschine nach der Positionierung und Ausrichtung im Gelände in Gang gesetzt werden kann. Auch kann ein Schalter oder Taster 7D an der Eingabeeinheit 7A vorgesehen sein, um die Baumaschine anhalten zu können, bevor sie sich über die gesamte Länge der Sollkurve bewegt hat. Nach dem Stoppen der Baumaschine können dann beispielsweise neue Parameter auf der Tastatur oder oderm Touch-Screen 7B eingeben werden, um den Verlauf der Kurve zu ändern, beispielsweise das zu erstellende Objekt in der Höhe zu verschieben.

## Patentansprüche

1. Selbstfahrende Baumaschine, insbesondere Gleitschalungsfertiger, Straßenfertiger oder Straßenfräse, mit
   einem Maschinenrahmen (3),
   einer am Maschinenrahmen angeordneten Arbeitseinheit (6) mit Arbeitsmitteln zur Errichtung von Baukörpern (10) auf einem Gelände oder zum Verändern des Geländes,
   einer Antriebseinheit (4A,4B; 5A,5B) mit Antriebsmitteln zum Ausführen von translatorischen und/oder rotatorischen Bewegungen der Baumaschine auf dem Gelände und
   einer Steuereinheit (7) zum Steuern der Antriebseinheit derart, dass die Baumaschine auf dem Gelände translatorische und/oder rotatorische Bewegungen ausführt,
   wobei
   die Steuereinheit (7) aufweist:

   Mittel zur Vorgabe einer bestimmten geometrischen Form des zu errichtenden Baukörpers oder des zu verändernden Geländes,
   Mittel zur Ermittlung von Daten, die die Position und/oder die Orientierung eines Referenzpunktes (R) der Baumaschine in Bezug zu einem von der Position und
   Orientierung der Baumaschine unabhängigen Bezugssystem (X, Y, Z) beschreiben,
   Mittel zur Ermittlung von eine Sollkurve beschreibenden Daten, die derart ausgebildet sind, dass die die Sollkurve beschreibenden Daten auf der Grundlage der vorgegebenen geometrischen Form des zu errichtenden Baukörpers oder des zu verändernden Geländes und auf der Grundlage der Position und Orientierung des Referenzpunktes (R) der Baumaschine in dem von der Position und
   Orientierung der Baumaschine unabhängigen Bezugssystem (X, Y, Z) ermittelt werden, wobei die Sollkurve die Kurve ist, auf der sich der Referenzpunkt (R) der Baumaschine in dem von der Position und Orientierung der Baumaschine unabhängigen Bezugssystem (X, Y, Z) bewegen soll, und
   Mittel zum Steuern der Antriebseinheit in Abhängigkeit von den die Sollkurve beschreibenden Daten derart, dass sich der Referenzpunkt (R) der Baumaschine ausgehend von einem vorgegebenen Startpunkt, an der die Baumaschine eine vorgegebene Position und/oder Orientierung im Gelände hat, auf der Sollkurve bewegt.

2. Baumaschine nach Anspruch 1, **dadurch gekennzeichnet, dass** die die Sollkurve beschreibenden Daten die Wegstrecke und/oder die Krümmung der Sollkurve beschreiben.

3. Baumaschine nach Anspruch 1 oder 2, **dadurch gekennzeichnet, dass** die Mittel zum Steuern der Antriebseinheit derart ausgebildet sind, dass die Antriebseinheit in Abhängigkeit von der Position und/oder Orientierung des Referenzpunktes (R) in dem von der Position und Orientierung der Baumaschine unabhängigen Bezugssystem (X, Y, Z) derart gesteuert wird, dass der Abstand (D) zwischen der von der Sollkurve beschriebenen Soll-Position (P) und der Ist-Position (Xr, Yr) des Referenzpunktes R und/oder der von der Sollkurve beschriebenen Richtungsdifferenz ($\Delta\Phi$) zwischen der Soll-Richtung ($\alpha$) und der Ist-Richtung ($\Phi$) der Baumaschine minimal ist.

4. Baumaschine nach einem der Ansprüche 1 bis 3, **dadurch gekennzeichnet, dass** die Mittel zur Ermittlung von die Position und/oder die Orientierung des Referenzpunktes (R) beschreibenden Daten einen ersten und einen zweiten DGPS-Empfänger (S1, S2) zur Dekodierung von GPS-Satellitensignalen eines globalen Navigationssatellitensystems (GPS) und Korrektursignalen einer Referenzstation für die Bestimmung der Position und Orientierung der Baumaschine aufweisen, wobei der erste und zweite DGPS-Empfänger (S1, S2) an der Baumaschine in unterschiedlichen Positionen (S1, S2) angeordnet sind.

5. Baumaschine nach Anspruch 4, **dadurch gekennzeichnet, dass** die Mittel zur Ermittlung von die Position und/oder die Orientierung des Referenzpunktes beschreibenden Daten einen ersten und einen zweiten Empfänger (S1, S2) eines satellitenunabhängigen Messsystems aufweisen.

6. Baumaschine nach einem der Ansprüche 1 bis 5, **dadurch gekennzeichnet, dass** die Mittel zur Vorgabe einer bestimmten geometrischen Form des zu errichtenden Baukörpers oder des zu verändernden Geländes eine Eingabeeinheit (7A) mit Mitteln (7B) zum Eingeben von Parametern aufweisen, die die geometrische Form des zu errichtenden Baukörpers oder des zu verändernden Geländes beschreiben.

7. Baumaschine nach Anspruch 6, **dadurch gekennzeichnet, dass** die Parameter die Länge einer Gerade und/oder eines Radius eines Kreisbogens definierende Parameter sind.

8. Baumaschine nach einem der Ansprüche 1 bis 7, **dadurch gekennzeichnet, dass** die Mittel zur Vorgabe einer bestimmten geometrischen Form des zu errichtenden Baukörpers oder des zu verändernden Geländes eine Eingabeeinheit (7A) mit Mitteln (7B) zur Auswahl einer geometrischen Form aus einer Mehrzahl von geometrischen Formen aufweisen.

9. Baumaschine nach Anspruch 8, **dadurch gekennzeichnet, dass** die Steuereinheit (7) eine mit der Eingabeeinheit (7A) zusammenwirkende Speichereinheit (7C) aufweist, in der eine Mehrzahl von geometrischen Formen gespeichert sind.

10. Baumaschine nach einem der Ansprüche 1 bis 9, **dadurch gekennzeichnet, dass** die Eingabeeinheit (7A) Mittel (7B) zum Verändern einer geometrischen Form aufweist.

11. Baumaschine nach einem der Ansprüche 1 bis 10, **dadurch gekennzeichnet, dass** die Steuereinheit (7) Mittel (7D) zum Starten der Bewegung der Baumaschine an einem vorgegebenen Startpunkt im Gelände aufweist, an der die Baumaschine eine vorgegebene Position und Orientierung hat.

12. Baumaschine nach einem der Ansprüche 1 bis 11, **dadurch gekennzeichnet, dass** die Steuereinheit (7) Mittel (7D) zum Stoppen der Bewegung der Baumaschine auf der Sollkurve aufweist.

13. Baumaschine nach einem der Ansprüche 1 bis 12, **dadurch gekennzeichnet, dass** das die Baumaschine eine Straßenfräse (1) ist, wobei die Arbeitseinheit eine Fräseinrichtung (6) mit einer Fräswalze (6A) aufweist.

14. Baumaschine nach einem der Ansprüche 1 bis 12, **dadurch gekennzeichnet, dass** die Baumaschine ein Gleitschalungsfertiger (1) ist, wobei die Arbeitseinheit eine Vorrichtung zum Formen von fließfähigem Material (6) aufweist.

15. Baumaschine nach einem der Ansprüche 1 bis 12, **dadurch gekennzeichnet, dass** die Baumaschine ein Straßenfertiger (1) ist, wobei die Arbeitseinheit eine Einbaubohle zum Formen von Material (6) aufweist.

16. Verfahren zum Steuern einer selbstfahrenden Baumaschine, nach einem der Ansprüche 1 bis 15, mit folgenden Verfahrensschritten:

Vorgeben einer bestimmten geometrischen Form des zu errichtenden Baukörpers oder des zu verändernden Geländes,
Ermitteln von Daten, die die Position und/oder die Orientierung eines Referenzpunktes (R) der Baumaschine in Bezug zu einem von der Position und Orientierung der Baumaschine unabhängigen Bezugssystem (X, Y, Z) beschreiben,

Ermitteln von eine Sollkurve beschreibenden Daten auf der Grundlage der vorgegebenen geometrischen Form des zu errichtenden Baukörpers oder des zu verändernden Geländes und auf der Grundlage der Position und Orientierung des Referenzpunktes (R) der Baumaschine in dem von der Position und Orientierung der Baumaschine unabhängigen Bezugssystem (X, Y, Z), wobei die Sollkurve die Kurve ist, auf der sich der Referenzpunkt (R) der Baumaschine in dem von Position und Orientierung der Baumaschine unabhängigen Bezugssystem (X, Y, Z) bewegen soll, und

Steuern der Baumaschine in Abhängigkeit von den die Sollkurve beschreibenden Daten derart, dass sich der Referenzpunkt (R) der Baumaschine ausgehend von einem vorgegebenen Startpunkt, an der die Baumaschine eine vorgegebene Position und/oder Orientierung im Gelände hat, auf der Sollkurve bewegt.

17. Verfahren nach Anspruch 16, **dadurch gekennzeichnet, dass** die die Sollkurve beschreibenden Daten die Wegstrecke und/oder die Krümmung der Sollkurve beschreiben.

18. Verfahren Anspruch 16 oder 17, **dadurch gekennzeichnet, dass** die Baumaschine in Abhängigkeit von der Position und/oder Orientierung des Referenzpunktes (R) in dem von der Position und Orientierung der Baumaschine unabhängigen Bezugssystem (X, Y, Z) derart gesteuert wird, dass der Abstand (D) zwischen der von der Sollkurve beschriebenen Soll-Position (P) und der Ist-Position (Xr, Yr) des Referenzpunktes R und/oder der von der Sollkurve beschriebenen Richtungsdifferenz ($\Delta\Phi$) zwischen der Soll-Richtung ($\alpha$) und der Ist-Richtung ($\Phi$) der Baumaschine minimal ist.

19. Verfahren nach einem der Ansprüche 16 bis 18, **dadurch gekennzeichnet, dass** der Schritt der Vorgabe einer bestimmten geometrischen Form des zu errichtenden Baukörpers oder des zu verändernden Geländes die Eingabe von die geometrische Form beschreibenden Parametern und/oder die Auswahl einer geometrischen Form aus einer Mehrzahl von geometrischen Formen umfasst.

20. Verfahren zur Errichtung eines Baukörpers (10) auf einem Gelände und/oder zum Verändern des Geländes mit einer selbstfahrenden Baumaschine, nach einem der Ansprüche 1 bis 15, wobei
im Gelände ein Startpunkt für die Bewegung der Baumaschine ausgewählt und die Orientierung der Baumaschine am Startpunkt festgelegt wird,
die Baumaschine an den ausgewählten Startpunkt bewegt und an dem Startpunkt in der festgelegten Orientierung ausgerichtet wird,
eine Sollkurve für die Bewegung der Baumaschine ermittelt wird, und
die Baumaschine auf der Sollkurve zur Errichtung eines Baukörpers (10) auf dem Gelände und/oder zum Verändern des Geländes bewegt wird.

**Claims**

1. Self-propelled civil engineering machine, and in particular a slipform paver, road paver or road milling machine, comprising
a chassis (3),
a working unit (6) arranged on the chassis which has working means for producing structures (10) on the ground or for making changes to the ground,
a drive unit (4A,4B; 5A,5B) which has drive means to allow the civil engineering machine to perform movements in translation and/or rotation on the ground, and a
control unit (7) for controlling the drive unit in such a way that the civil engineering machine performs movements in translation and/or rotation on the ground,
wherein the control unit (7) comprises:

means for presetting a given geometrical shape for the structure to be produced or for the ground to which changes are to be made,
means for determining data which defines the position and/or orientation of a reference point (R) on the civil engineering machine in relation to a reference system (X, Y, Z) which is independent of the position and orientation of the civil engineering machine,
means for determining data defining a desired curve which are so designed that the data defining the desired curve is determined on the basis of the preset geometrical shape of the structure to be produced or the ground to which changes are to be made and on the basis of the position and
orientation of the reference point (R) on the civil engineering machine in the reference system (X, Y, Z) independent of the position and orientation of the civil engineering machine, the desired curve being that curve along which the reference point (R) on the civil engineering machine is to move in the reference system (X, Y, Z) independent of the position and orientation of the civil engineering machine, and
means for controlling the drive unit, as a function of the data defining the desired curve, in such a way that the reference point (R) on the civil engineering machine moves along the desired curve starting from a preset starting point at which the civil engineering machine is in a preset position and orientation on the ground.

2. Civil engineering machine according to claim 1, **characterised in that** the data defining the desired curve defines the distance travelled along the desired curve and/or its curvature.

3. Civil engineering machine according to claim 1 or 2, **characterised in that** the means for controlling the drive unit are so designed that the drive unit is so controlled, as a function of the position and/or orientation of the reference point (R) in the reference system (X, Y, Z) independent of the position and orientation of the civil engineering machine, that the distance (D) between the desired position (P) of the reference point R, as defined by the desired curve, and its actual position (Xr, Yr), and/or the difference in direction ($\Delta\Phi$) defined by the desired curve between the desired direction ($\alpha$) of the civil engineering machine and its actual direction ($\Phi$), is minimal.

4. Civil engineering machine according to one of claims 1 to 3, **characterised in that** the means for determining data defining the position and/or orientation of the reference point (R) have a first and a second DGPS receiver (S1, S2) for decoding GPS satellite signals from a satellite-based global positioning systems (GPS) and correcting signals from a reference station for determining the position and orientation of the civil engineering machine, the first and second DGPS receivers (S1, S2) being arranged in different positions (S1, S2) on the civil engineering machine.

5. Civil engineering machine according to claim 4, **characterised in that** the means for determining data defining the position and/or orientation of the reference point have a first and a second receiver (S1, S2) belonging to a non-satellite measuring system.

6. Civil engineering machine according to one of claims 1 to 5, **characterised in that** the means for presetting a given geometrical shape for the structure to be produced or the ground to which changes are to be made have an input unit (7A) having means (7B) for the input of parameters which define the geometrical shape of the structure to be produced or the ground to which changes are to be made.

7. Civil engineering machine according to claim 6, **characterised in that** the parameters are parameter which define the length of a straight line and/or the radius of an arc of a circle.

8. Civil engineering machine according to one of claims 1 to 7, **characterised in that** the means for presetting a given geometrical shape for the structure to be produced or the ground to which changes are to be made have an input unit (7A) having means (7B) for selecting one geometrical shape from a plurality of geometrical shapes.

9. Civil engineering machine according to claim 8, **characterised in that** the control unit (7) has a storage unit (7C) which co-operates with the input unit (7A) and in which a plurality of geometrical shapes are stored.

10. Civil engineering machine according to one of claims 1 to 9, **characterised in that** the input unit (7A) has means (7B) for modifying a geometrical shape.

11. Civil engineering machine according to one of claims 1 to 10, **characterised in that** the control unit (7) has means (7D) for starting the movement of the civil engineering machine at a preset starting point on the ground at which the civil engineering machine is in a preset position and orientation.

12. Civil engineering machine according to one of claims 1 to 11, **characterised in that** the control unit (7) has means (7D) for stopping the movement of the civil engineering machine along the desired curve.

13. Civil engineering machine according to one of claims 1 to 12, **characterised in that** the civil engineering machine is a road milling machines (1), the working unit having a milling arrangement (6) having a milling drum (6A).

14. Civil engineering machine according to one of claims 1 to 12, **characterised in that** the civil engineering machine is a slipform paver (1), the working unit having an arrangement for moulding flowable material (6).

15. Civil engineering machine according to one of claims 1 to 12, **characterised in that** the civil engineering machine is a road paver (1), the working unit having a screed for shaping material (6).

16. Method of controlling a self-propelled civil engineering machine according to one of claims 1 to 15, having the following method steps:

presetting of a given geometrical shape for the structure to be produced or the ground to which changes are to be made,
determining of data which defines the position and/or orientation of a reference point (R) on the civil engineering machine in relation to a reference system (X, Y, Z) independent of the position and orientation of the civil engineering machine,
determining of data defining a desired curve, on the basis of the preset geometrical shape for the structure to be produced or the ground to which changes are to be made and on the basis of the position and orientation of the reference point (R) on the civil engineering machine in the reference system (X, Y, Z) independent of the position and orientation of the civil engineering machine, the desired curve being that curve along which the reference point (R) on the civil engineering machine is to move in the reference system (X, Y, Z) independent of the position and orientation of the civil engineering machine, and
control of the civil engineering machine, as a function of the data defining the desired curve, in such a way that that the reference point (R) on the civil engineering machine moves along the desired curve starting from a preset starting point at which the civil engineering machine is in a preset position and orientation on the ground.

17. Method according to claim 16, **characterised in that** the data defining the desired curve defines the distance travelled along the desired curve and/or its curvature.

18. Method according to claim 16 or 17, **characterised in that** the civil engineering machine is so controlled, as a function of the position and/or orientation of the reference point (R) in the reference system (X, Y, Z) independent of the position and orientation of the civil engineering machine, that the distance (D) between the desired position (P) of the reference point R, as defined by the desired curve, and its actual position $(X_r, Y_r)$, and/or the difference in direction $(\Delta\Phi)$ defined by the desired curve between the desired direction $(\alpha)$ of the civil engineering machine and its actual direction $(\Phi)$, is minimal.

19. Method according to one of claims 16 to 18, **characterised in that** the step of the presetting of a given geometrical shape for the structure to be produced or the ground to which changes are to be made comprises the input of parameters defining the geometrical shape and/or the selection of one geometrical shape from a plurality of geometrical shapes.

20. Method of producing a structure (10) on ground and/or of making changes to the ground, with a self-propelled civil engineering machine according to one of claims 1 to 15, wherein
a starting point for the movement of the civil engineering machine is selected on the ground and the orientation of the civil engineering machine at the starting point is laid down,
the civil engineering machine is moved to the selected starting point and is aligned, at the starting point, in the orientation which has been laid down,
a desired curve for the movement of the civil engineering machine is determined, and
the civil engineering machine is moved along the desired curve to produce a structure (10) on the ground and/or to make changes to the ground.

**Revendications**

1. Machine de chantier autopropulsée, plus particulièrement machine à coffrage glissant, finisseur ou fraiseuse routière, avec
un châssis de machine (3),
une unité de travail (6), disposée sur le châssis de machine, avec des moyens de travail pour la construction d'ouvrages (10) sur un terrain ou pour la modification d'un terrain,
une unité d'entraînement (4A, 4B ; 5A, 5B) avec des moyens de travail pour la réalisation de mouvements de translation et/ou de rotation de la machine de chantier sur le terrain et

une unité de commande (7) pour la commande de l'unité d'entraînement de façon à ce que la machine de chantier effectue sur le terrain des mouvements de translation et/ou de rotation,
l'unité de commande (7) comprenant :

des moyens pour la prédétermination d'une forme géométrique déterminée de l'ouvrage à construire ou du terrain à modifier,
des moyens pour la détermination de données qui décrivent la position et/ou l'orientation d'un point de référence (R) de la machine de chantier par rapport à un système de référence (X, Y, Z) indépendant de la position et de l'orientation de la machine de chantier,
des moyens pour la détermination de données décrivant une courbe de consigne, qui sont conçus de façon à ce que les données décrivant la courbe de consigne sont déterminées sur la base de la forme géométrique prédéterminée de l'ouvrage à construire ou du terrain à modifier et sur la base de la position et de l'orientation du point de référence (R) de la machine de chanteur dans le système de référence (X, Y, Z) indépendant de la position et de l'orientation de la machine de chantier, la courbe de consigne étant la courbe sur laquelle le point de référence (R) de la machine de chantier doit se déplacer dans le système de référence (X, Y, Z) indépendant de la position et de l'orientation de la machine de chantier et
des moyens pour la commande de l'unité d'entraînement en fonction des données décrivant la courbe de consigne, de façon à ce que le point de référence (R) de la machine de chantier se déplace sur la courbe de consigne à partir d'un point de départ prédéterminé auquel la machine de chantier a une position et/ou une orientation prédéterminée sur le terrain.

2. Machine de chantier selon la revendication 1, **caractérisée en ce que** les données décrivant la courbe de consigne décrivent la trajectoire et/ou la courbure de la courbe de consigne.

3. Machine de chantier selon la revendication 1 ou 2, **caractérisée en ce que** les moyens de commande de l'unité d'entraînement sont conçus de façon à ce que l'unité d'entraînement est commandée en fonction de la position et/ou de l'orientation du point de référence (R) dans le système de référence (X, Y, Z) indépendant de la position et de l'orientation de la machine de chantier de façon à ce que la distance (D) entre la position de consigne (P) décrite par la courbe de consigne et la position réelle ($X_r$, $Y_r$) du point de référence R et/ou la différence de direction ($\Delta\Phi$) entre la direction de consigne ($\alpha$) et la direction réelle ($\Phi$) de la machine de chantier soit minimale.

4. Machine de chantier selon l'une des revendications 1 à 3, **caractérisée en ce que** les moyens de détermination des données décrivant la position et/ou l'orientation du point de référence (R) comprennent un premier et un deuxième récepteur DGPS (S1, S2) pour le décodage de signaux de satellites GPS d'un système de navigation par satellite, GPS, et de signaux de correction d'une station de référence pour la détermination de la position et de l'orientation de la machine de chantier, le premier et le deuxième récepteur DGPS (S1, S2) étant disposés sur la machine de chantier à différentes positions (S1, S2).

5. Machine de chantier selon la revendication 4, **caractérisée en ce que** les moyens de détermination des données décrivant la position et/ou l'orientation du point de référence comprennent un premier et un deuxième récepteur (S1, S2) d'un système de mesure indépendant des satellites.

6. Machine de chantier selon l'une des revendications 1 à 5, **caractérisée en ce que** les moyens de prédétermination d'une forme géométrique déterminée de l'ouvrage à construire ou du terrain à modifier comprennent une unité de saisie (7 A) avec des moyens (7B) pour la saisie de paramètres qui décrivent la forme géométrique de l'ouvrage à construire ou du terrain à modifier.

7. Machine de chantier selon la revendication 6, **caractérisée en ce que** les paramètres sont des paramètres définissant la longueur d'une droite et/ou un rayon d'un arc de cercle.

8. Machine de chantier selon l'une des revendications 1 à 7, **caractérisée en ce que** les moyens de prédétermination d'une forme géométrique déterminée de l'ouvrage à construire ou du terrain à modifier comprennent une unité de saisie (7A) avec des moyens (7B) pour la sélection d'une forme géométrique parmi une pluralité de formes géométriques.

9. Machine de chantier selon la revendication 8, **caractérisée en ce que** l'unité de commande (7) comprend une unité de mémoire (7C) interagissant avec l'unité de saisie (7A), dans laquelle une pluralité de formes géométriques sont enregistrées.

**10.** Machine de chantier selon l'une des revendications 1 à 9, **caractérisée en ce que** l'unité de saisie (7A) comprend des moyens (7B) pour la modification d'une forme géométrique.

**11.** Machine de chantier selon l'une des revendications 1 à 10, **caractérisée en ce que** l'unité de commande (7) comprend des moyens (7D) pour le démarrage du mouvement de la machine de chantier au niveau d'un point de départ prédéterminé sur le terrain, au niveau duquel la machine de chantier présente une position et une orientation prédéterminée.

**12.** Machine de chantier selon l'une des revendications 1 à 11, **caractérisée en ce que** l'unité de commande (7) comprend des moyens (7D) pour l'arrêt du mouvement de la machine de chantier sur la courbe de consigne.

**13.** Machine de chantier selon l'une des revendications 1 à 12, **caractérisée en ce que** la machine de chantier est une fraiseuse routière (1), l'unité d'entraînement comprenant un dispositif de fraisage (6) avec un rouleau de fraisage (6A).

**14.** Machine de chantier selon l'une des revendications 1 à 12, **caractérisée en ce que** la machine de chantier est une machine à coffrage glissant (1), l'unité d'entraînement comprenant un dispositif de formage d'un matériau fluide (6).

**15.** Machine de chantier selon l'une des revendications 1 à 12, **caractérisée en ce que** la machine de chantier est un finisseur (1), l'unité d'entraînement comprenant une poutre incorporée pour le formage d'un matériau (6).

**16.** Procédé de commande d'une machine de chantier auto-propulsée selon l'une des revendications 1 à 15, avec les étapes suivantes :

prédétermination d'une forme géométrique déterminée de l'ouvrage à construire ou du terrain à modifier, détermination des données qui décrivent la position et/ou l'orientation d'un point de référence (R) de la machine de chantier par rapport à un système de référence (X, Y, Z) indépendant de la position et de l'orientation de la machine de chantier, détermination des données décrivant une courbe de consigne sur la base de la forme géométrique prédéterminée et sur la base de la position de l'orientation du point de référence (R) de la machine de chantier dans le système de référence (X, Y, Z) indépendant de la position et de l'orientation de la machine de chantier, la courbe de consigne étant la courbe sur laquelle le point de référence (R) de la machine de chantier doit se déplacer dans le système de référence (X, Y, Z) indépendant de la position et de l'orientation de la machine de chantier et commande de la machine de chantier en fonction des données décrivant la courbe de consigne de façon à ce que le point de référence (R) se déplace sur la courbe de consigne à partir d'un point de départ prédéterminé, au niveau duquel la machine de chantier présente une position et/ou une orientation prédéterminée sur le terrain.

**17.** Procédé selon la revendication 16, **caractérisé en ce que** les données décrivant la courbe de consigne décrivent la trajectoire et/ou la courbure de la courbe de consigne.

**18.** Procédé selon la revendication 16 ou 17, **caractérisé en ce que** la machine de chantier est commandée en fonction de la position et/ou de l'orientation du point de référence (R), dans le système de référence (X, Y, Z) indépendant de la position et de l'orientation de la machine de chantier, de façon à ce que la distance (D) entre la position de consigne (P) décrite par la courbe de consigne et la position réelle (Xr, Yr) du point de référence R et/ou la différence de direction ($\Delta\Phi$) entre la direction de consigne ($\alpha$) et la direction réelle ($\Phi$) de la machine de chantier soit minimale.

**19.** Procédé selon la revendication 16 à 18, **caractérisé en ce que** l'étape de prédétermination d'une forme géométrique déterminée de l'ouvrage à construire ou du terrain à modifier comprend la saisie de paramètres décrivant la forme géométrique et/ou la sélection d'une forme géométrique parmi une pluralité de formes géométriques.

**20.** Procédé de construction d'ouvrages (10) sur un terrain et/ou de modification du terrain avec une machine chantier auto-propulsée selon l'une des revendications 1 à 15, moyennant quoi :

sur le terrain, un point de départ étant sélectionné pour le mouvement de la machine de chantier et l'orientation de la machine de chantier au point de départ est déterminée, la machine de chantier est déplacée vers le point de départ et est placée dans l'orientation déterminée au niveau du point de départ, une courbe de consigne pour le déplacement de la machine de chantier est déterminée et la machine de chantier est déplacée sur la courbe de consigne pour la construction d'un ouvrage (10) sur le terrain et/ou pour la modification du terrain.

**Fig. 1**

EP 2 336 424 B1

**Fig. 2**

**Fig. 3**

Fig. 4

EP 2 336 424 B1

Fig. 5

Fig. 6

Fig. 7

EP 2 336 424 B1

Fig. 8

Fig. 9

EP 2 336 424 B1

**EP 2 336 424 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1103659 B1
- US 5612864 A
- WO 9516228 A
- DE 19750315 A1
- EP 1118713 A1
- EP 2119832 A1
- DE 29918748 U1